# EUROPEAN PATENT APPLICATION

(11) **EP 0 836 823 A1**
(43) Date of publication of application: **22.04.1998**
(21) Application number: 97902586.3
(22) Date of filing: 06.02.1997
(51) Int. Cl.: A47J 27/00, A47J 36/02, A47J 41/00, C09K 5/00, A47J 39/00, A47J 39/02

(54) **HEAT ACCUMULATING PAN AND HEAT INSULATION COOKING CONTAINER**

(30) Priority: 09.02.1996 JP 24426/96; 09.02.1996 JP 24427/96
(71) Applicant: NIPPON SANSO CORPORATION, Tokyo 105 (JP)
(72) Inventor: SHIGETA, Kenji, Nippon Sanso Corporation, Nishikanbara-gun, Niigata 959-02 (JP); KUWANA, Takeshi, Nippon Sanso Corporation, Nishikanbara-gun, Niigata 959-02 (JP); NISHINO, Yoshiya, Nippon Sanso Corporation, Nishikanbara-gun, Niigata 959-02 (JP); KOMIYA, Yasuhiko, Nippon Sanso Corporation, Nishikanbara-gun, Niigata 959-02 (JP); MATSUDA, Kunio, Nippon Sanso Corporation, Nishikanbara-gun, Niigata 959-02 (JP); HIROSE, Masato, Nippon Sanso Corporation, Nishikanbara-gun, Niigata 959-02 (JP)
(74) Representative: Hackney, Nigel John
(86) International application number: JP9700281
(87) International publication number: WO9728726

(57) **Abstract**

The present invention relates to a heat-accumulating pot comprising a pot main body and a heat-accumulating unit which is attached to the outer surface of the pot main body in an attachable and detachable manner. The present invention also relates to a thermally insulated cooking vessel having: a thermally insulating vessel; a cooking pot which is housed in the thermally insulating vessel in a manner such that the cooking pot may be freely inserted into and removed from the thermally insulating vessel; a lid member possessing thermally insulating ability which is provided at the periphery of a mouth portion of the thermally insulating vessel in a manner such that the lid member can be arbitrarily opened and closed, and which closes an opening of the mouth portion of the thermally insulating vessel when the cooking pot is housed therein; wherein the thermally insulated cooking vessel is characterized in that a heat-accumulating material is provided on at least a part of a bottom or side portion of the cooking pot.

## Description

### TECHNICAL FIELD

The present invention relates to a heat-accumulating pot for containing partially or completely cooked food, the pot possessing a heat-accumulating function, and relates to a thermally insulated cooking vessel which is capable of retaining heat in the food as well as cooking the food in a thermally insulated manner, by having the heat-accumulating pot housed in a thermally insulating outer vessel.

### BACKGROUND ART

For the purpose of improving heat-retaining ability after completing heating of a cooking pot, some products have been hitherto known, in which a heat-accumulating material is attached to the bottom surface of a pot; in which a pot is in the form of a double-walled vessel, and the space thereof is filled with a heat-accumulating material; or in which a container which possesses thermally insulating ability is used as an outer vessel for housing a cooking pot.

As one of these types of thermally insulated cooking vessels, a thermally insulated cooking vessel described in Japanese Utility Model Application, Second Publication (Kokoku), No. Hei 4-28490, has been known. In Figure 1 of this publication, a thermally insulated cooking vessel is disclosed which comprises: a thermally insulating vessel having primary handles on both sides, respectively, and having an opening at the upper portion; a cooking pot which has an inner pot, and which can be housed in the thermally insulating vessel in a manner such that the cooking pot may be freely inserted into and removed from the thermally insulating vessel; a thermally insulating outer lid which can close the opening; communicating portions which are provided with the thermally insulating outer lid or thermally insulating vessel so as to be positioned above the primary handles, and which allow communication between inside and outside of the thermally insulating vessel; and secondary handles, base ends of which are fixed to both sides of the cooking pot, respectively, and which project through the communicating portions to the outside. Using this thermally insulated cooking vessel, one can continue stewing while keeping the cooking pot at a high temperature, by putting ingredients for a stew or the like in the cooking pot, placing the cooking pot, which is closed by a lid, on the fire so as to boil for a certain period of time and to partially cook the ingredients, thereafter housing the cooking pot in a suspended manner in the thermally insulating vessel, and closing the thermally insulating outer lid.

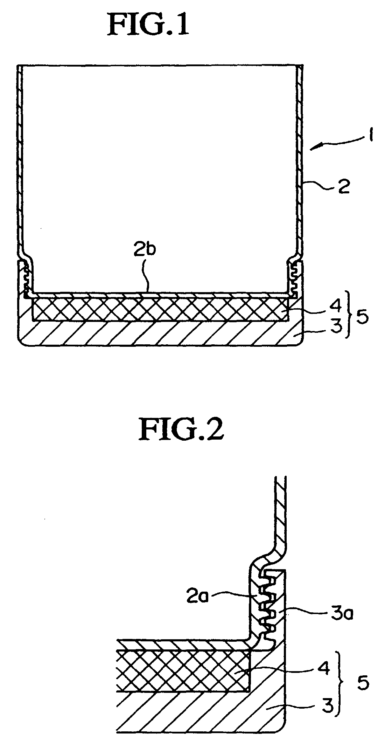

In addition, Japanese Utility Model Application, Second Publication (Kokoku), No. Sho 63-21215, discloses in Figure 1 a pot characterized in that a pot main body is provided with a convex portion in the bottom surface thereof so that the convex portion faces upward, the convex portion being hollow and having a cross-sectional shape of a semicircle with the lower side opened, and in that a heat-accumulating metal having the same shape as the convex portion is buried in the hollow portion of the hollow convex portion in a manner such that a slight space is left between the convex portion and the heat-accumulating metal. This pot maintains boiling condition for some time after the pot is removed from the heat source or after the heat source is turned off.

However, since with regard to a pot to which a heat-accumulating material is adhered or with regard to a pot in which a double walled vessel is filled with a heat-accumulating material, the heat accumulation capacity is dependent on the heat-accumulating material, there are problems in that the heat after heating is uncontrollable, whereby the food may be overcooked or undercooked.

For example, a heat-radiating effect of a heat-accumulating material is utilized for cooking which does not require the heat-radiating effect after heating, and the addition of excessive heat may deteriorate the result of the cooking. Moreover, since part of the heat at the initial heating is taken up by the heat-accumulating material, a longer period of cooking time is required, and the thermal energy is unnecessarily wasted. For example, as for the thermally insulated cooking vessel disclosed in the Japanese Utility Model Application, Second Publication (Kokoku), No. Hei 4-28490, when a small amount of food to be cooked is put in the cooking pot, or in the case where cooking which requires a small amount of heat, such as boiling fish and steam-cooking, is conducted, sufficient effects of thermal insulation and heat retention cannot be obtained, and there is the possibility that food is insufficiently cooked; therefore, it is necessary to extend the period for partial cooking, by boiling the food for a certain period of time.

Furthermore, in the case where a cooking pot is housed in a thermally insulating outer vessel, there is the possibility that the cooking process may be incomplete due to lack of heat-retaining ability.

On the other hand, as a method for avoiding the adverse effects of excessive radiation from the heat-accumulating material, it has been known to put a heat-accumulating material directly into a pot only when the heat-radiating effect of the heat-accumulating material is needed. However, the heat-accumulating material, if directly put into the pot, would have made direct contact with the food itself, whereby hygienic problems might have arisen.

Moreover, by merely equipping the pot with the heat-accumulating material at the bottom of the pot in an attachable and detachable manner, both the pot and the heat-accumulating materials are deformed due to thermal expansion when the pot is heated, and a space is formed in the joining interface between the pot and the heat-accumulating material, whereby there have been possibilities that the heat which the heat-accumulating material receives from a heat source cannot be transferred to the pot, rattling occurs between the pot and the heat-accumulating material, or attaching or detaching of the heat-accumulating material becomes impracticable.

Furthermore, a pot disclosed in the Japanese Utility Model Application, Second Publication (Kokoku), No. Sho 63-21215, can maintain boiling for several minutes after heating for boiling has been completed; however, since the heat in the pot itself is not specially retained, the temperature of the pot decreases later, and the effects from the heat-accumulating metal which is buried under the bottom surface of the pot main body cannot be sufficiently utilized. In addition, when food to be cooked, which is in an inner pot in particular, is heated, there have been problems in that some heat from a heat source is used in accumulating heat in the heat-accumulating metal, as well as that heat is not efficiently transferred to the pot since there is a space between the pot and the heat-accumulating metal, and therefore a long heating period was necessary for the food to be cooked.

### DISCLOSURE OF INVENTION

It is an object of the present invention to provide a heat-accumulating pot in which a heat-accumulating material is attached to a cooking pot in an attachable and detachable manner, so that the heat-accumulating material may be selected from among various types of heat-accumulating materials which are made ready for use, depending on heat-retaining ability needed for a variety of cooking, and to provide a thermally insulated cooking vessel in which such a pot is employed.

Another object of the present invention is to provide a thermally insulated cooking vessel in which accumulation of heat in a heat-accumulating material can be realized efficiently, easily, and safely, heat of the heat-accumulating material can be efficiently transferred to contents of a cooking pot by providing the cooking pot of the thermally insulated cooking vessel with the heat-accumulating material, the temperature inside the cooking pot can be maintained at a high level, the heat-retaining ability does not deteriorate, boiling for a certain period of time is not necessary even when a small amount of food is to be cooked, and cooking can be sufficiently conducted.

A cooking pot of the present invention comprises a pot main body and a heat-accumulating unit which is attached to the outer surface of the pot main body in an attachable and detachable manner.

In the cooking pot of the present invention, the attachment portions of the aforesaid pot main body and heat-accumulating unit may be made of the same material.

In the cooking pot of the present invention, the aforesaid heat-accumulating unit may have a multilayer structure comprising a flexible heat-accumulating material and a rigid heat-accumulating material.

A thermally insulated cooking vessel of the present invention comprises: a heat-accumulating pot which comprises a pot main body and a heat-accumulating unit which is attached to the outer surface of the pot main body in an attachable and detachable manner; a thermally insulating vessel to house the heat-accumulating pot; and a lid possessing thermally insulating ability which is provided at an opening of the thermally insulating vessel.

In the thermally insulated cooking vessel of the present invention, the attachment portions of the aforesaid pot main body and heat-accumulating unit may be made of the same material.

In the thermally insulated cooking vessel of the present invention, the aforesaid heat-accumulating unit may have a multilayer structure comprising a flexible heat-accumulating material and a rigid heat-accumulating material.

Another aspect of a thermally insulated cooking vessel of the present invention is a thermally insulated cooking vessel having: a thermally insulating vessel; a cooking pot which is housed in the thermally insulating vessel in a manner such that the cooking pot may be freely inserted into and removed from the thermally insulating vessel; a lid member possessing thermally insulating ability which is provided at the periphery of a mouth portion of the thermally insulating vessel in a manner such that the lid member can be arbitrarily opened and closed, and which closes an opening of the mouth portion of the thermally insulating vessel when the cooking pot is housed therein;
wherein the thermally insulated cooking vessel is characterized in that a heat-accumulating material is provided on at least a part of a bottom or side portion of the cooking pot.

In this thermally insulated cooking vessel, a part of the aforesaid cooking pot may form a direct heat-transferring portion on which the heat-accumulating material is not disposed.

In this thermally insulated cooking vessel, the heat-accumulating material which is provided to the cooking pot may consist of a single type of heat-accumulating material or a composite heat-accumulating material in which plural types of heat-accumulating materials are combined together.

The aforesaid composite heat-accumulating material may comprise a latent-heat-accumulating material and a sensible-heat-accumulating material.

In the thermally insulated cooking vessel of the present invention, a heat-shielding plate which is attachable and detachable may be attached to the aforesaid cooking pot so as to be approximately parallel to the side portion of the aforesaid cooking pot during heating.

The aforesaid heat-shielding plate may be suitably used when it comprises a body portion, which has a cylindrical form having a diameter larger than that of the cooking pot, and a rim portion in which the upper end of the body portion extends inward along the diameter so as to be joined with the outer surface of the upper end portion of the cooking pot; and in that the body portion is provided with an air introduction opening at a lower end, and the rim portion is provided with a vent.

### BRIEF DESCRIPTION OF DRAWINGS

Fig. 1 is a cross-sectional view showing a first mode of a heat-accumulating pot according to the present invention.

Fig. 2 is an enlarged view of a main portion of the same heat-accumulating pot.

Fig. 3 is a cross-sectional view showing a second mode of a heat-accumulating pot according to the present invention.

Fig. 4 is a cross-sectional view showing a third mode of a heat-accumulating pot according to the present invention.

Fig. 5 is a cross-sectional view showing a first mode of a thermally insulated cooking vessel according to the present invention.

Fig. 6 is a cross-sectional view showing a second mode of a thermally insulated cooking vessel according to the present invention.

Fig. 7 is a cross-sectional view showing a third mode of a thermally insulated cooking vessel according to the present invention.

Fig. 8 is a cross-sectional view showing a fourth mode of a thermally insulated cooking vessel according to the present invention.

Fig. 9 is a perspective view showing an element to be used in a fifth mode of a thermally insulated cooking vessel according to the present invention.

Fig. 10 is a cross-sectional view showing a cooking pot of the same thermally insulated cooking vessel.

### BEST MODE FOR CARRYING OUT THE INVENTION

### Working Example 1: First Mode of Heat-accumulating Pot

Figs. 1 and 2 show a first mode of a heat-accumulating pot according to the present invention. This heat-accumulating pot 1 is constructed of a pot main body 2 and a heat-accumulating unit 5 which is screwed on to the bottom portion of the pot main body 2.

The aforesaid pot main body 2 is made of metal such as stainless steel, carbon steel, and copper, and has a cylindrical form with a flat bottom. On the circumferential surface of a lower portion of the pot main body 2, a pot screw portion 2a is formed, which has a diameter smaller than the outer diameter of the pot main body 2.

The heat-accumulating unit 5 is in a disk shape having an outer diameter which is approximately the same as the outer diameter of the aforesaid pot main body 2. In the edge upper portion on the circumference of the heat-accumulating unit 5, a screw portion 3a is formed, which extends upward so as to make a screw joint with the aforesaid pot screw portion 2a. This heat-accumulating unit 5 is constructed from a rigid heat-accumulating material 3 having stiffness and a flexible heat-accumulating material 4; the rigid heat-accumulating material being of the same material as the pot main body 2, and forming the screw portion 3a and the bottom portion of the heat-accumulating unit 3 continuously; the flexible heat-accumulating material 4 being shaped to have an outer diameter which is approximately the same as the outer diameter of the aforesaid pot screw portion 3a, and being disposed on the upper surface of the rigid heat-accumulating material 3 so as to be housed in the space between the bottom surface 2b of the pot main body and the upper surface of the rigid heat-accumulating material 3 when the rigid heat-accumulating material 3 is screwed on to the bottom portion of the pot main body 2. As this flexible heat-accumulating material 4, aluminum wool, steel wool, or the like, may be used, which is made by compressing wire or narrow tape of metal such as aluminum, steel, and copper, in a manner such that the elasticity remains. This flexible heat-accumulating material 4 as well as the rigid heat-accumulating material 3 is able to have thermal energy accumulated therein in a sensible-heat-accumulating material.

This heat-accumulating pot 1, in the condition that the heat-accumulating unit 5 is attached to the bottom portion of the pot main body 2 by screwing the heat-accumulating unit 5 on, can be used in a manner similar to a conventional pot main body. That is to say, food materials are put in the pot main body 1 to which the heat-accumulating unit is attached, the pot main body 2 is covered by a companion lid, and the bottom portion of the heat-accumulating unit 5 is heated by a heating means such as a stove. By this heating, the heat-accumulating unit 5 reaches a high temperature. This heat is transferred from the rigid heat-accumulating material 3 to the bottom surface 2b of the pot main body via the flexible heat-accumulating material. Thus, the food material in the pot main body 2 can be cooked by heat. In addition, even if the heating is discontinued after the cooking by heat has been carried out for a desired period of time, thermal energy which has been accumulated in the heat-accumulating unit 5 is radiated, by which the pot main body 2 can be maintained at a high temperature for a considerably long period of time.

Moreover, according to the type of cooking, the cooking may be conducted by directly heating the pot main body 2, from which the heat-accumulating unit 5 is removed.

Furthermore, by choosing the heat-accumulating unit from among various types of heat-accumulating units which are made of different amounts of rigid heat-accumulating material and flexible heat-accumulating material, i.e., heat-accumulating units possessing different heat accumulation capacities, a duration for which a high temperature is maintained after heating has been completed may be arbitrarily selected, and therefore, this heat-accumulating pot is applicable to various types of cooking.

In addition, by disposing the flexible heat-accumulating material 4, which is elastic, in the upper portion of the rigid heat-accumulating material 3 of the heat-accumulating unit 5, this heat-accumulating pot 1 can readily adapt to deformation of the pot bottom or the heat-accumulating material due to thermal expansion; therefore, the bottom portion of the pot main body 2 and the joining portion of the heat-accumulating unit 5 always make close contact with each other, and the heat which the heat-accumulating unit 5 has received from the heat source can be efficiently transferred to the pot main body 2. Furthermore, removal of the rigid heat-accumulating material 3, which has a function of protecting the entire heat-accumulating unit 5, from the pot main body 2 after heating has been completed may be facilitated by making the pot main body 2 and the rigid heat-accumulating material in the attachment portion of the heat-accumulating unit 5 with the same material.

### Working Example 2: Second Mode of Heat-accumulating Pot

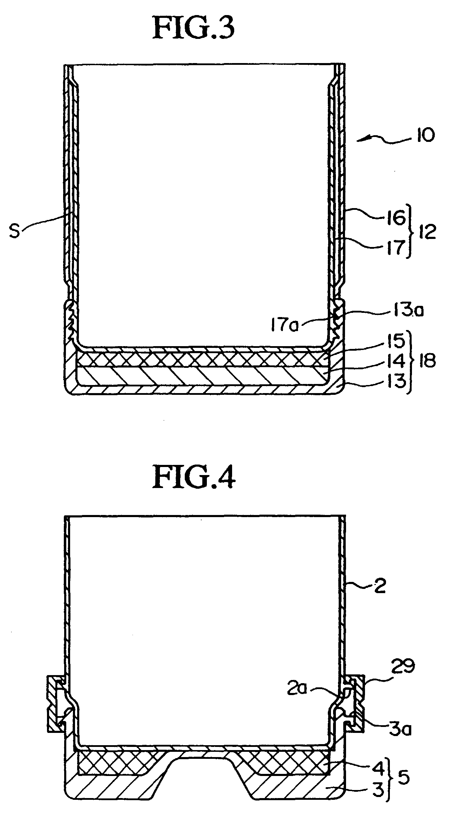

Fig. 3 shows a second mode of a heat-accumulating pot according to the present invention. This heat-accumulating pot 10 comprises a pot main body 12 having a double-walled structure in the side portion, and a heat-accumulating unit 18 which is attached to the bottom portion of the pot main body 12 in an attachable and detachable manner.

The aforesaid pot main body 12 comprises an inner vessel 17, which has a cylindrical form with a bottom, and an outer cylinder 16 which is joined to the circumferential surface of the inner vessel, with a sealed space S maintained between the inner vessel and the outer cylinder. On the outer surface of a lower portion of the inner vessel 17, a pot screw portion 17a is formed. The outer cylinder 16, which is a cylinder having a diameter larger than the diameter of the inner vessel 17, with a lower end portion having a reduced diameter, is joined to the inner vessel 17, by means of welding or brazing the lower end portion of the outer cylinder 16 to a position above the pot screw portion 17a of the inner vessel 17. In addition, the upper end portion of the inner vessel 17 has an enlarged diameter so as to be in contact with the outer cylinder 16, and the upper end portion of the inner vessel 17 and the upper end portion of the outer cylinder 16 are joined together by welding or brazing.

The aforesaid heat-accumulating unit 18 is constructed from: a first rigid heat-accumulating material 13 which is made of the same metallic material as that of the pot main body 12, and which has a cylindrical form with a bottom; a second rigid heat-accumulating material 14 having a disk shape, which is disposed inside the first rigid heat-accumulating material; and a flexible heat-accumulating material 15, which is disposed on the second rigid heat-accumulating material 14. As this flexible heat-accumulating material 15, aluminum wool, steel wool, or the like, may be used, which is made by compressing wire or narrow tape of metal such as aluminum, steel, and copper, in a manner such that the elasticity remains. The second rigid heat-accumulating material 14 is made of a material which is different from the material of the first rigid heat-accumulating material 13, for example, made from a ceramic plate. On the inner surface side of the upper end portion of the first rigid heat-accumulating material 13, a screw portion 13a is formed so as to be screwed on to the pot screw portion 17a of the pot main body 12.

Ways of using this heat-accumulating pot 12 and effects attained by using it are equivalent to those of the above described heat-accumulating pot 1 according to the first mode.

In addition, the space S may be evacuated. In this case, heat-retaining ability is further enhanced.

### Working Example 3: Third Mode of Heat-accumulating Pot

Fig. 4 shows a third mode of a heat-accumulating pot according to the present invention. This heat-accumulating pot is constructed of a pot main body 2 and a heat-accumulating unit 5 attached to the lower portion of the pot main body 2, the heat-accumulating unit 5 comprising a rigid heat-accumulating material 3 and a flexible heat-accumulating material 4. This heat-accumulating unit 5 is the same as that of the heat-accumulating pot 1 in Fig. 1, except that a central portion of the rigid heat-accumulating material 3 is convex on the upper side so that the convex portion is in direct contact with the bottom surface of the pot main body. The outer surface of a lower portion of the pot main body 2 is provided with a plurality of projections 2a. In addition, the outer surface of an upper end portion of the rigid heat-accumulating material 3 is provided with projections 3a which are companions to the projections 2a of the pot main body 2. The projections 2a of the pot main body 2 and the projections 3a of the heat-accumulating unit 5 are fixed by means of a clamp 29.

The heat-accumulating pot according to this example has a constitution in which the heat-accumulating unit 5 is attached to the pot main body 2 by means of the clamp 29 in a manner such that attaching and detaching are easy, instead of making use of screw attachment which is a means for attaching the pot main body 2 and the heat-accumulating unit 5 according to the above-described first mode. Ways of using the heat-accumulating pot according to this example and effects attained by using it are equivalent to those of the above described heat-accumulating pot 1 according to the first mode. In addition, since the heat-accumulating pot according to this example has a constitution in which a central portion of the rigid heat-accumulating material 3 is convex on the upper side, and in which the convex portion is in direct contact with the bottom surface of the pot main body, heating of food to be cooked and heating of the heat-accumulating material can be carried out simultaneously, and thermal energy can be efficiently utilized.

### Working Example 4: First Mode of Thermally Insulated Cooking Vessel

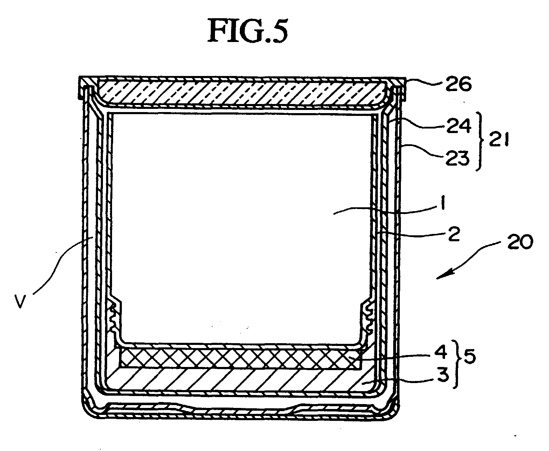

Fig. 5 shows a first mode of a thermally insulated cooking vessel according to the present invention. This thermally insulated cooking vessel 20 comprises a heat-accumulating pot 1, a thermally insulating vessel 21 to house the heat-accumulating pot 1, and an outer lid 26 which is to close the opening of the thermally insulating vessel 21 when the heat-accumulating pot 1 is housed therein.

The heat-accumulating pot 1 is constructed of a pot main body 2 and a heat-accumulating unit 5 which is screwed on to the bottom portion of the pot main body 2.

The aforesaid thermally insulating vessel 21 is constructed by integrating an inner vessel 24, which has a cylindrical form with a bottom, having a size large enough to house the heat-accumulating pot 1, and an outer vessel 23, which is similar in shape to the inner vessel 24, and which is slightly larger in dimensions, by joining the inner and outer vessels by welding or brazing the respective upper end portions together; and then forming a thermally insulating vacuum layer or a thermally insulating layer of a thermally insulating material in the space V between the inner vessel 24 and the outer vessel 23. The inner vessel 24 and the outer vessel 23 are made of metal such as stainless steel.

The outer lid 26 is constructed by filling the inside of a main body, which is made of synthetic resin or metal, with a thermally insulating material such an organic foam.

When using the thermally insulated cooking vessel 20, by conducting cooking or partial cooking using the heat-accumulating pot 1, thereafter placing the entire heat-accumulating pot 1 into the thermally insulating vessel 21, and closing the outer lid 26 so as to preserve thermal insulation, materials in the heat-accumulating pot 1 can be maintained at a high temperature for a long period of time due to heat radiation from the heat-accumulating unit 5, and therefore cooking by heating for a long period of time such as stewing can be carried out.

In addition, although this thermally insulated cooking vessel comprises heat-accumulating pot 1 as shown in Fig. 1, the heat accumulating pot 1 may be constructed from the heat-accumulating pot 10 as shown in Fig. 3 or the heat-accumulating pot as shown in Fig. 4, instead of the above heat-accumulating pot 1.

### Working Example 5: Second Mode of Thermally Insulated Cooking Vessel

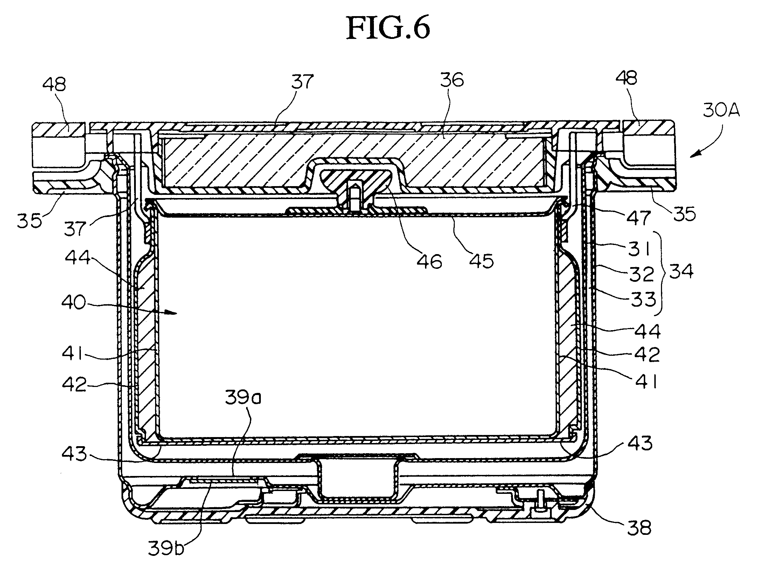

Fig. 6 shows a second mode of a thermally insulated cooking vessel according to the present invention. This thermally insulated cooking vessel 30A is constructed of: a thermally insulating vessel 34, which is a metallic thermally insulating vacuum double-walled vessel comprising an inner vessel 31 and an outer vessel 32 which are integrated by joining them at the respective upper end portions, and the double-walled vessel being provided with a thermally insulating vacuum layer 33 in the space between the inner vessel 31 and the outer vessel 32; a shoulder member 35 with a handle, the shoulder member being fixed to the outer surface of the upper end portion of the thermally insulating vessel 34, and being made of a synthetic resin; an outer lid 37 which comprises a thermally insulating material 36, and which is attached to the opening at the upper portion of the thermally insulating vessel 34 so as to arbitrarily open and close the opening; a bottom member 38 made of a synthetic resin, which is fixed so as to cover the bottom portion of the thermally insulating vessel 34; and a cooking pot 40 housed inside the thermally insulating vessel 34.

The aforesaid cooking pot 40 is constructed of: a metallic cooking pot main body 41; a metallic outer cylinder 42 which is provided outside the cooking pot main body 41; a bottom plate member 43 which is in contact with a bottom portion of the cooking pot main body 41, and which is joined and integrated with the lower end of the outer cylinder 42; a heat-accumulating material 44 which is filled between the inner surface of the outer cylinder 42 and the outside surface of the cooking pot main body 41; a metallic inner lid 45 which closes the opening at the upper portion of the cooking pot main body 41; a knob 46 made of synthetic resin, which is attached to the inner lid 45; and a pair of cooking pot handles 47, each member of which is disposed in opposite circumferential directions, an end of each cooking pot handle being fixed to the outer surface of the upper end portion of the outer cylinder 42.

This cooking pot main body 41 has a cylindrical form with a flat bottom. Furthermore, the outer cylinder 42 has an approximately cylindrical form, the upper end portion of which has a reduced diameter. This portion which has a reduced diameter is joined to the upper end portion of the cooking pot main body 41 by welding or brazing.

The aforesaid cooking pot handle 47 comprises: a metallic portion which is extended upward from one end portion (a lower end portion), which is fixed to outer surface of the upper end portion of the outer cylinder 42 by welding or brazing, and bent outward in the direction of the diameter so as to be extended outward; and a grip portion 48 made of synthetic resin, which is attached to the distal end of the metallic portion.

As the heat-accumulating material for the thermally insulated cooking vessel of the present invention, one or both of a latent-heat-accumulating material, such as paraffin and microcrystalline waxes and a sensible-heat-accumulating material, such as metals and inorganic substances, may be used. As the latent-heat-accumulating material, a material which can accumulate a great amount of thermal energy in the form of latent heat, accompanying a liquid-solid phase change, is used. As the sensible-heat-accumulating material, a metallic or ceramic material having a large heat accumulation capacity per weight or per volume, which is able to accumulate thermal energy without accompanying a phase change. In the thermally insulated cooking vessel 30A, a latent-heat-accumulating material such as paraffin is used as a heat-accumulating material 44.

In the following, a process for producing this thermally insulated cooking vessel 30A will be explained.

In order to produce a thermally insulating vessel 34, a metallic double-walled vessel is first formed by separately preparing an inner vessel 31 and outer vessel 32, which are made of metal, such as stainless steel, and then integrating the inner and outer vessels by joining them at the respective upper end portions by welding or brazing. In the bottom portion of the outer vessel 32, an evacuation hole 39a is provided by boring. Subsequently, this metallic double-walled vessel is placed in a vacuum heating furnace with the bottom portion up, a brazing material is disposed at the peripheral portion of the evacuation hole 39a, a metallic sealing plate is 39b is put thereon, inside the vacuum heating furnace is heated at a predetermined brazing temperature while the furnace is evacuated to form a vacuum, and thereafter the furnace is cooled. By this series of operations, a metallic double-walled vacuum vessel (a thermally insulating vessel 34) is produced which is provided with a thermally insulating vacuum layer 33 between the inner vessel 31 and the outer vessel 32. Then, to the thus-obtained thermally insulating vessel 34, a shoulder member 35 having handles and a bottom member 38, which are produced separately from the thermally insulating vessel, are attached. In addition, a separately prepared thermally insulating lid 37 is connected to the shoulder member 35 by a hinge.

In order to produce the cooking pot 40, first a cooking pot main body 41, an outer cylinder 42, a bottom plate member 43, and cooking pot handles 47 are separately prepared, then the cooling pot main body 41 is covered by the outer cylinder 42, and the respective upper end portions are joined together in a gas-tight manner by welding or brazing. Subsequently, the cooking pot main body 41 with the outer cylinder is set down with the bottom portion up, and through a gap between the lower end of the outer cylinder 42 and the bottom portion of the cooking pot main body 41, a latent-heat-accumulating material, such as paraffin, which is heated and melted beforehand, is filled in the space between the outer cylinder 42 and the cooking pot main body 41. Subsequently, the bottom portion of the cooking pot main body 41 is covered by the bottom plate member 43, and its periphery is joined to the lower end of the outer cylinder 42 in a gas-tight manner by welding or brazing. Then, the cooking pot handles 47 are joined to the outer surface of the upper end portion of the outer cylinder 42 by welding or brazing, and a separately prepared inner lid 45 is added so as to complete the cooking pot 40.

By providing the cooking pot 40, which is housed in the thermally insulating vessel 34, with the heat-accumulating material 44, the thermally insulated cooking vessel 30A makes it possible to carry out heat accumulating processes concurrently with the cooking of food in this cooking pot 40, and allows the user to carry out, trouble free, heat accumulation which is effective in cooking in a thermally insulated manner. Moreover, food to be cooked, which is in the thermally insulated cooking vessel, can be maintained at a high temperature for a longer period of time than in a conventional thermally insulated cooking vessel, and therefore, the duration before the temperature reaches a temperature range which is generally considered to be hygienically unsafe, can be extended. In addition, even in the case when only a small amount of food is to be cooked, or when cooking which requires a small amount of heat is conducted, thermally insulated cooking can be carried out sufficiently by the heat-radiating effects of the heat-accumulating material 44, and thereby a wider variety of food can be cooked. Moreover, since the bottom portion of the cooking pot 40 is a direct heat-transferring portion, which can directly transfer the heat of cooking to the food to be cooked without the heat-accumulating material 44 being interposed, supply of heat to the food to be cooked, which is in the cooking pot 40, is more efficiently effectuated concurrently with heat accumulation by the heat-accumulating material 44.

In addition, by disposing the heat-accumulating material 44 only on the side portion of this cooking pot 40, the heat-accumulating material on the side of the cooking pot can be efficiently heated and allowed to accumulate the heat due to an updraft effect of the heat.

### • Experimental Example 1

A thermally insulated cooking vessel 30A as shown in Fig. 6 was produced.

A thermally insulating vessel 34 was produced by separately preparing an inner vessel 31 and an outer vessel 32, which had a cylindrical forms with a bottom, then integrating the vessels by welding respective upper end portions, subsequently placing this metallic double walled vessel in a vacuum heating furnace with the bottom portion up, disposing a brazing material at the peripheral portion of an evacuation hole 39a, putting a metallic sealing plate 39b thereon, and heating inside the vacuum heating furnace at a predetermined brazing temperature while the furnace was evacuated to form a vacuum, and the evacuation hole 39a was sealed. To the thus-obtained thermally insulating vessel 34, a shoulder member 35 having handles and a bottom member 38, which were separately prepared, were attached. In addition, a separately prepared thermally insulating lid 37 was connected to the shoulder member 35 by a hinge.

In order to produce a cooking pot 40, first a cooking pot main body 41, an outer cylinder 42, a bottom plate member 43, and cooking pot handles 47 were separately prepared using stainless steel as a material, then the cooking pot main body 41 was covered by the outer cylinder 42, and the respective upper end portions were joined together in a gas-tight manner by welding. Subsequently, the cooking pot main body 41 with the outer cylinder was set down with the bottom portion up, and through a gap between the lower end of the outer cylinder 42 and the bottom portion of the cooking pot main body 41, 270 g of paraffin (a heat accumulating material 44), which had been heated and melted beforehand, was filled in the space between the outer cylinder 42 and the cooking pot main body 41. Subsequently, the bottom portion of the cooking pot main body 41 was covered by the bottom plate member 43, and its periphery was joined to the lower end of the outer cylinder 42 in a gas-tight manner by welding. Then, the cooking pot handles 47 were joined to the outer surface of the upper end portion of the outer cylinder 42 by spot welding, and a separately prepared inner lid 45 was put thereover so as to complete the cooking pot 40.

In the thus-produced cooking pot 40, water at normal temperature was poured and boiled once, and thereafter, the cooking pot 40 was housed in the thermally insulating vessel 34. After leaving them in a thermostatic room at 20°C for 6 hours, the temperature of water in the cooking pot 40 was measured. The results are shown in Table 1. For comparison, a similar test was conducted with respect to a conventional metallic single-layered cooking pot which does not have a thermally insulating material (this is referred to as "conventional single layer" in Table 1). It should be noted that the capacities of the cooking pot 40 according to this example (referred to as a "present invention product") and the conventional single-layered cooking pot were both 3 liters.

**Table 1**

| | Cooking pot inside thermally insulating vessel | | Cooking pot alone |
|---|---|---|---|
| | Present invention product | Conventional single layer | Conventional single layer |
| 2.5 liter water | 79.6°C | 73.8°C | 35.0°C |
| 1.0 liter water | 68.4°C | 54.6°C | - |

As is evident from Table 1, by using the cooking pot 40 of the present invention product, the heat-retaining ability of a thermally insulated cooking vessel can be improved, and particularly when the amount of water contained in the cooking pot 40 is small, the difference in heat-retaining ability was marked, and the temperature did not decrease to 60°C (which is generally considered to be hygienically unsafe due to problems such spoilage) so that a desirable heat-retaining ability was maintained.

### Working Example 6: Third Mode of Thermally Insulated Cooking Vessel

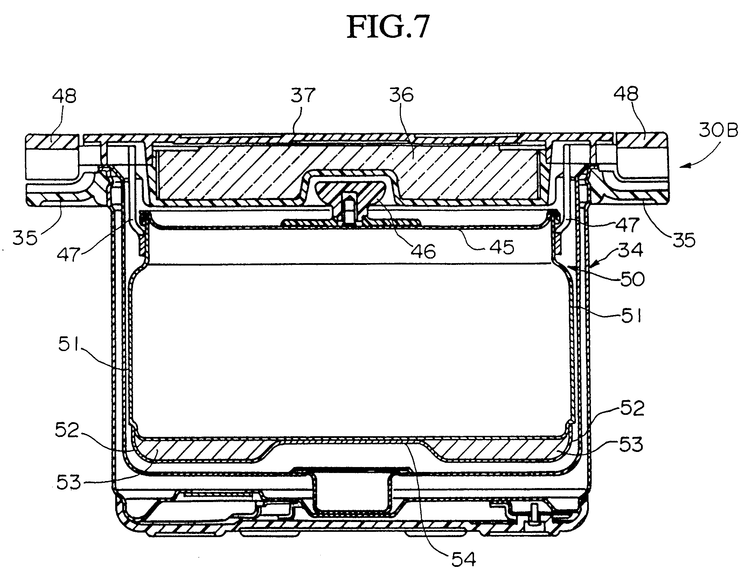

Fig. 7 shows a third mode of a thermally insulated cooking vessel according to the present invention. This thermally insulated cooking vessel 30B has the same construction as the above-described thermally insulated cooking vessel 30A in Fig. 6, except for the cooking pot.

The cooking pot 50 of this thermally insulated cooking vessel 30B is constructed of: a metallic cooking pot main body 51 which has a cylindrical form with a bottom (a flat bottom); a metallic bottom plate member 52, which is provided at the bottom portion of the cooking pot main body 51, and which has a disk shape in which the central portion and the peripheral portion protrude with respect to the other portions; a granular or powdery heat-accumulating material 53, which is filled between the outer surface of the bottom portion of the cooking pot main body 51 and a portion of the bottom plate member 52 other than the central portion; a metallic inner lid 45 which closes the opening at the upper portion of the cooking pot main body 51; a knob 46 made of synthetic resin, which is attached to the inner lid 45; and a pair of cooking pot handles 47, which are disposed in opposite circumferential directions, an end of each cooking pot handle being fixed to the outer surface of the upper end portion, which has a reduced diameter, of the cooking pot main body 51.

The central portion of the aforesaid bottom plate member 52 is in contact with the bottom portion of the cooking pot main body 51 without having interposed therebetween the heat-accumulating material 53, so as to be a direct heat-transferring portion which is able to transfer the heat of cooking directly to the cooking pot main body 51 without the heat-accumulating material 53 being interposed. In addition, as the heat-accumulating material 53, a sensible-heat-accumulating material such as inorganic powder or inorganic particles such as sand may be used.

In order to produce this cooking pot 50, first a cooking pot main body 51, a bottom plate member 52, and cooking pot handles 47 are separately prepared, a heat-accumulating material 53 is filled in a portion of the bottom plate member 52 other than the central portion, the bottom plate member is engaged with the bottom portion of the cooking pot main body 51, and the periphery of the bottom plate member 52 is joined to the outer surface of the cooking pot main body 51 by welding or brazing. Subsequently, the cooking pot handles 47 are joined to the outer surface of the upper end portion of the cooking pot main body 51 by welding or brazing, and a separately prepared inner lid 45 is added so as to complete the cooking pot 50.

This thermally insulated cooking vessel 30B yields almost the same effects as those exhibited by the above second example. Moreover, since this cooking pot 50 is provided with the direct heat-transferring portion 54, which does not have the heat-accumulating material 53, in the central portion of the bottom portion, when the cooking pot 50 is heated, the heat-accumulating material is heated and allowed to accumulate the heat, and at the same time, food to be cooked, which has been placed in the cooking pot 50, can be also strongly heated; accordingly, the time required for heating food to be cooked can be much the same as for a conventional metallic single-layered vessel.

It should be noted that although this example is so constructed that the direct heat-transferring portion 54, which transfers heat without being interposed by the heat-accumulating material 53, in the central portion of the bottom portion of the cooking pot main body 51, the construction may be such that the heat-accumulating material 53 is disposed in the central portion of the cooking pot main body 51, and the surrounding portion may serve as a direct heat-transferring portion 54.

Furthermore, in place of the aforesaid heat-accumulating material 53, a doughnut-shaped metallic plate may be fixed to the bottom portion of the cooking pot main body 51 so as not to dispose a heat-accumulating material in the central portion of the bottom portion.

### • Experimental Example 2

A thermally insulated cooking vessel 30B as shown in Fig. 7 was produced. A thermally insulating vessel 34 was prepared in a manner similar to the above Experimental Example 1.

In order to produce this cooking pot 50, first a cooking pot main body 51, a bottom plate member 52, and cooking pot handles 47 were separately prepared using stainless steel as a material, 560 g of sand, which is a sensible-heat-accumulating material, was filled in a portion of the bottom plate member 52 other than the central portion, the bottom plate member was engaged with the bottom portion of the cooking pot main body 51, and the periphery of the bottom plate member 52 was joined to the outer surface of the cooking pot main body 51 by welding. Subsequently, the cooking pot handles 47 were joined to the outer surface of the upper end portion of the cooking pot main body 51 by welding, and a separately prepared inner lid 45 was added so as to complete the cooking pot 50.

In the thus-produced cooking pot 50, water was poured and boiled once, and thereafter, the cooking pot 50 was housed in the thermally insulating vessel 34. After leaving them in a thermostatic room at 20°C for 6 hours, the temperature of water in the cooking pot was measured. The result is shown in Table 2. It should be noted that the capacity of this cooking pot 50 was 3 liters.

**Table 2**

| | |
|---|---|
| 2.5 liter water | 78.2°C |
| 1.0 liter water | 60.0°C |

In comparison with the conventional single-layered cooking pot in Table 1, the cooking pot 50 evidently has further improved heat-retaining ability than a conventional product, and the temperature did not go below 60°C, which is an unsafe temperature for keeping food.

Since this cooking pot 50 was provided with the direct heat-transferring portion 54, which did not have the heat-accumulating material 53, in the central portion of the bottom portion, when the cooking pot 50 was heated, the heat-accumulating material was heated and allowed to accumulate heat, and at the same time, food to be cooked, which had been placed in the cooking pot 50, could be also strongly heated; accordingly, the time required for heating food to be cooked was much the same as for a conventional metallic single-layered vessel.

In addition, it was confirmed that as for a cooking pot which had a construction in which a heat-accumulating material 53 was disposed in the central portion of the cooking pot main body 51, and the surrounding portion served as a direct heat-transferring portion 54 (instead of a construction in which a direct heat-transferring portion 54, which transfers heat without being interposed by a heat-accumulating material 53, is provided in the central portion of the bottom portion of the cooking pot main body 51), similar effects were observed.

Furthermore, it was confirmed that as for a cooking pot which had a construction in which a doughnut-shaped aluminum plate was fixed to the bottom portion of the cooking pot main body 51, in place of the aforesaid heat-accumulating material 53, so as not to dispose a heat-accumulating material in the central portion of the bottom portion, similar effects were observed.

### Working Example 7: Fourth Mode of Thermally Insulated Cooking Vessel

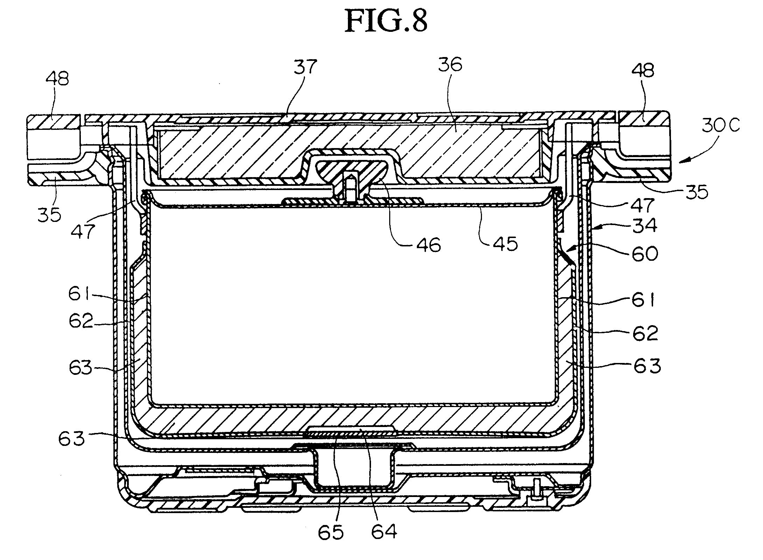

Fig. 8 shows a fourth mode of a thermally insulated cooking vessel according to the present invention. This thermally insulated cooking vessel 30C has the same construction as the above-described thermally insulated cooking vessel 30A in Fig. 6, except for the cooking pot.

The cooking pot 60 according to this example is constructed of: a metallic cooking pot main body 61 which has a cylindrical form with a bottom (a flat bottom); a metallic outer casing 62 which is provided so as to surround with a space the entire surface of the cooking pot main body 61 except for the upper end portion; a composite heat-accumulating material 63, which is filled between the cooking pot main body 61 and the outer casing 62, and which is in contact with the bottom portion and the side portion of the cooking pot main body 61; a metallic inner lid 45 which closes the opening at the upper portion of the cooking pot main body 61; a knob 46 made of synthetic resin, which is attached to the inner lid 45; and a pair of cooking pot handles 47, each member of which is disposed in opposite circumferential directions, an end of each cooking pot handle being fixed to the outer surface of the upper end portion of the cooking pot main body 61.

The aforesaid outer casing 62 has a cylindrical form with a bottom, having a diameter larger than the cooking pot main body 61, and the upper end portion thereof has a reduced diameter. This upper end portion is in close contact with the outer surface of the upper end portion of the cooking pot main body 61, so as to be integrated with the cooking pot main body 61. The center of the bottom portion of the outer casing 62 is provided with an opening 64 for introducing the composite heat-accumulating material 63, and the opening 64 is sealed by a metallic sealing plate 65.

As the composite heat-accumulating material 63, a mixture of a latent-heat-accumulating material, such as paraffin, and a sensible-heat-accumulating material, such as metal powder and inorganic powder, is used, and in particular, the mixture in which metal powder having a high thermal conductivity is used as the sensible-heat-accumulating material is preferably employed. By using the latent-heat-accumulating material and the sensible-heat-accumulating material, which has a high thermal conductivity, in combination accordingly, effects from convective heat transfer of paraffin or the like and conductive heat transfer of metallic powder add up together, heat-transferring ability of aluminum coexists without damaging heat-accumulating ability of the latent-heat-accumulating material such as paraffin, and heat transfer to the cooking pot main body 61 is improved.

In order to produce this cooking pot 60, first a cooking pot main body 61, an outer casing 62, a sealing plate 65, and cooking pot handles 47 are separately prepared, then the cooking pot main body 61 is covered by the outer casing 62, and the upper end portion of the outer casing 62 is joined to the outer surface of the upper portion of the cooking pot main body 61 by welding or brazing. Subsequently, this is set down with the bottom portions up, and a composite heat-accumulating material 63, which is prepared by mixing metallic powder with a latent-heat-accumulating material which has been melted beforehand, is introduced through an opening 64 of the outer casing 62. Then, a sealing plate 65 is joined to the periphery of the opening 64 by brazing, so as to confine the introduced composite heat-accumulating material 63. Subsequently, the cooking pot handles 47 are joined to the outer surface of the upper end portion of the cooking pot main body 61 by welding or brazing, and a separately prepared inner lid 45 is added so as to complete the cooking pot 60.

This thermally insulated cooking vessel 30C can yield almost the same effects as those exhibited by the thermally insulated cooking vessel 30A as shown in Fig. 6. In addition, since this cooking pot 60 according to this mode employs the composite heat-accumulating material 63 in which a latent-heat-accumulating material and a sensible-heat-accumulating material which has a high thermal conductivity are combined, effects from convective heat transfer of paraffin or the like and conductive heat transfer of metallic powder add up together, heat-transferring ability of aluminum coexists without damaging heat-accumulating ability of the latent-heat-accumulating material such as paraffin, and heat transfer to the cooking pot main body 61 can be improved. Furthermore, since the composite heat-accumulating material is disposed on both the bottom surface and the side portion of the cooking pot main body 61, the heat accumulation capacity of this composite heat-accumulating material 63 can be increased, and in addition, the heat radiated from the composite heat-accumulating material 63 can be uniformly imparted to the food to be cooked.

### Working Example 8: Fifth Mode of Thermally Insulated Cooking Vessel

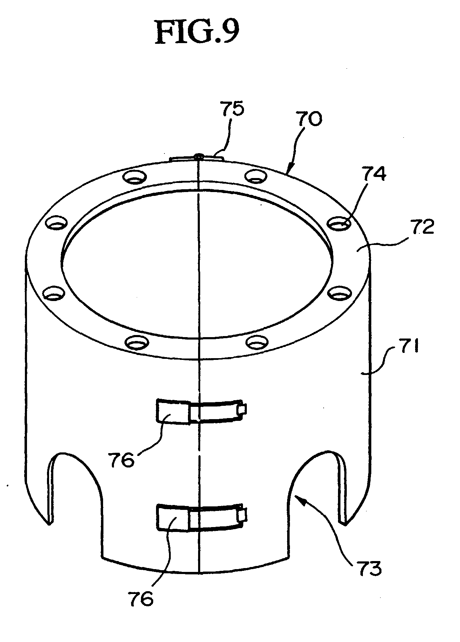

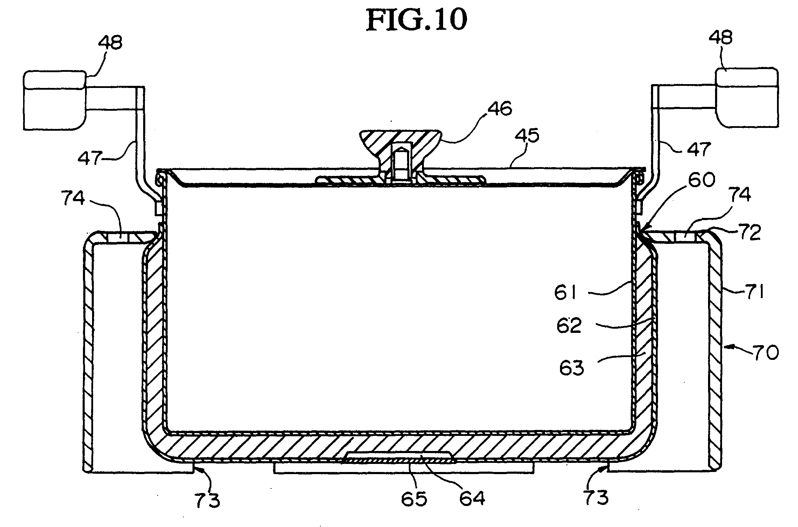

Figs. 9 and 10 show a fifth mode of a thermally insulated cooking vessel according to the present invention. This thermally insulated cooking vessel has the same construction as the above-described fourth mode, and has a construction in which a heat-shielding plate 70 is attached to the cooking pot 60, the heat-shielding plate comprising a body portion 71, which has a cylindrical form having a diameter larger than that of the cooking pot 60, and a rim portion 72 in which the upper end of the body portion extends inward along the diameter so as to fit together with the outer surface of the upper end portion of the cooking pot.

A plurality of air introduction openings are provided at the lower end of the body portion of this heat-shielding plate 70, and a plurality of vents, each in the shape of a circular hole, are disposed in the rim portion along a circumferential direction at intervals.

As shown in Fig. 9, this heat-shielding plate 70 is constructed by dividing a cylinder into two pieces, which are joined together by a hinge 75 in a manner such that the divided cylinder can be arbitrarily opened and closed, and providing a hook member 76 to the opposite side to the hinge 75. The construction of this heat-shielding plate 70 is such that when this hook member 76 is hooked, a cylinder is formed so as to fit together with the outside of the cooking pot 60 as shown in Fig. 10, and when the hook member 76 is unhooked and the cylinder is opened, it is readily removed from the cooking pot 60.

By attaching this heat-shielding plate 70 to the cooking pot 60, the cooking pot handles 47 and the grip portions 48 do not become hot during heating due to the heat-shielding effect of the heat-shielding plate 70. In addition, the heat-accumulating material 63 provided on the side of the cooking pot 61 can be efficiently heated and allowed to accumulate heat.

### • Experimental Example 3

A thermally insulated cooking vessel 30C as shown in Fig. 8 and a heat-shielding plate 70 as shown in Fig. 9 were produced. A thermally insulating vessel 34 was prepared in a manner similar to the above Experimental Example 1. First, a cooking pot main body 61, an outer casing 62, a sealing plate 65, and cooking pot handles 47 were separately prepared using stainless steel as a material, then the cooking pot main body 61 was covered by the outer casing 62, and the upper end portion of the outer casing 62 was joined to the outer surface of the upper portion of the cooking pot main body 61 by welding. Subsequently, this was set down with the bottom portions up, and 300 g of composite heat-accumulating material 63, which was prepared by mixing aluminum powder (a sensible-heat-accumulating material) with paraffin (a latent-heat-accumulating material) which had been melted beforehand, in the weight ratio of 1:1, was introduced through an opening 64 of the outer casing 62. Then, a sealing plate 65 was joined to the periphery of the opening 64 by brazing, so as to confine the introduced composite heat-accumulating material 63. Subsequently, the cooking pot handles 47 were joined to the outer surface of the upper end portion of the cooking pot main body 61 by spot welding, and a separately prepared inner lid 45 was added so as to complete the cooking pot 60.

When water was poured in the thus-prepared cooking pot 60, the heat-shielding plate 70 made of stainless steel as shown in Fig. 9 was attached thereto, and the cooking pot was plated on the fire so as to boil the water, the cooking pot handles 47 and the grip portions 48 did not become hot during heating due to the heat-shielding effect of the heat-shielding plate 70. In addition, the heat-accumulating material 63 provided on the side of the cooking pot 61 could be efficiently heated and allowed to accumulate heat. Moreover, the cooking pot 60 had a heat-retaining effect as good as the cooking pots of the above-described Working Examples 1 and 2.

It should be noted that although a thermally insulated cooking vessel in each of the above examples is constructed by using a metallic vacuum double-walled vessel as a thermally insulating vessel 34, a thermally insulating vessel in which a thermally insulating material composed of an organic foam material, inorganic powder, or the like, or a thermally insulating vessel in which a low-thermal-conductivity gas such as xenon, krypton, and argon, which has a thermal conductivity lower than air, is filled and sealed between an inner vessel 31 and an outer vessel 32, may be used in place of such a thermally insulating vessel 34. Furthermore, this thermally insulating vessel 34 may be formed by a material other than metal, such as synthetic resin and glass.

### INDUSTRIAL APPLICABILITY

As explained above, since a heat-accumulating pot according to the present invention has a construction in which a heat-accumulating material is attached to a cooking pot in an attachable and detachable manner, so that the heat-accumulating material may be selected from among various types of heat-accumulating materials which are made ready for use, depending on heat-retaining ability needed for a variety of cooking, the heat-accumulating pot is applicable to various types of cooking, and allows the cooking to always be conducted under suitable conditions.

In addition, by disposing a flexible heat-accumulating material, which is elastic, in the upper portion of the heat-accumulating unit, this heat-accumulating pot can readily adapt to deformation of the pot bottom or the heat-accumulating material due to thermal expansion; therefore, the pot bottom and the joining portion of the heat-accumulating material always make close contact with each other, and the heat which the heat-accumulating material has received from the heat source can be efficiently transferred to the pot. Furthermore, the rigid heat-accumulating material has a function of protecting the entire heat-accumulating unit by covering the above flexible heat-accumulating material, and in addition, removal of the rigid heat-accumulating material from the pot after heating has been completed may be facilitated by making the pot main body and the rigid heat-accumulating material in the attachment portion of the heat-accumulating unit with the same material. Furthermore, by preparing various types of heat-accumulating units having different heat accumulation capacities, from which a heat-accumulating unit is chosen to be used depending on the type of cooking and the amount of food, or by placing the heat-accumulating pot in a thermally insulating vessel, the duration for retaining a high temperature after heating can be made readily controllable, and cooking under the most suitable conditions is always possible. Moreover, it is also possible that the heat-accumulating unit is separately heated so as to accumulate the heat, and is then attached to the pot main body.

By providing the cooking pot, which is housed in the thermally insulating vessel, with the heat-accumulating material, the thermally insulated cooking vessel according to the present invention makes it possible to carry out heat accumulating processes concurrently with the cooking of food in this cooking pot, and allows the user to carry out, trouble free, heat accumulation which is effective in cooking in a thermally insulated manner. Moreover, food to be cooked, which is in the thermally insulated cooking vessel, can be maintained at a high temperature for a longer period of time than in a conventional thermally insulated cooking vessel, and therefore, the duration before the temperature reaches a temperature range which is generally considered to be hygienically unsafe, can be extended. In addition, even in the case when only a small amount of food is to be cooked, or when cooking which requires a small amount of heat is conducted, thermally insulated cooking can be carried out sufficiently by the heat-radiating effects of the heat-accumulating material 44, and thereby a wider variety of food can be cooked.

Moreover, by providing a direct heat-transferring portion, which does not contain the heat-accumulating material, in a part of the bottom portion of the cooking pot, supply of heat to the food to be cooked, which is in the cooking pot, is more efficiently effectuated concurrently with heat accumulation by the heat-accumulating material.

In addition, by combining a heat-accumulating material having a large thermal conductivity with another heat-accumulating material having a large heat-accumulating capacity but a poor heat-transferring ability with a small thermal conductivity, the heat-transferring ability of the heat-accumulating material itself can be improved, the duration for accumulating heat can be shortened, and the heat can be efficiently supplied to the food to be cooked, which is in the cooking pot.

In addition, by providing a heat-shielding plate which is attachable and detachable in parallel with the side portion of the cooking pot, temperature increase of the handle of the cooking pot can be restricted when the cooking pot is heated, and the heat can be efficiently supplied to the heat-accumulating material which is disposed on the side portion of the cooking pot.

## Claims

1. A heat-accumulating pot comprising a pot main body and a heat-accumulating unit which is attached to the outer surface of said pot main body in an attachable and detachable manner.

2. A heat-accumulating pot according to Claim 1, characterized in that attachment portions of said pot main body and heat-accumulating unit are made of the same material.

3. A heat-accumulating pot according to Claim 1, characterized in that said heat-accumulating unit has a multilayer structure comprising a flexible heat-accumulating material and a rigid heat-accumulating material.

4. A thermally insulated cooking vessel comprising: a heat-accumulating pot which comprises a pot main body and a heat-accumulating unit which is attached to the outer surface of the pot main body in an attachable and detachable manner; a thermally insulating vessel to house said heat-accumulating pot; and a lid possessing thermally insulating ability which is provided at an opening of said thermally insulating vessel.

5. A thermally insulated cooking vessel according to Claim 4, characterized in that attachment portions of said pot main body and heat-accumulating unit are made of the same material.

6. A thermally insulated cooking vessel according to Claim 4, characterized in that said heat-accumulating unit has a multilayer structure comprising a flexible heat-accumulating material and a rigid heat-accumulating material.

7. A thermally insulated cooking vessel having: a thermally insulating vessel; a cooking pot which is housed in said thermally insulating vessel in a manner such that the cooking pot may be freely inserted into and removed from said thermally insulating vessel; a lid member possessing thermally insulating ability which is provided at the periphery of a mouth portion of said thermally insulating vessel in a manner such that the lid member can be arbitrarily opened and closed, and which closes an opening of the mouth portion of said thermally insulating vessel when said cooking pot is housed therein;
wherein the thermally insulated cooking vessel is characterized in that a heat-accumulating material is provided on at least a part of a bottom or side portion of said cooking pot.

8. A thermally insulated cooking vessel according to Claim 7, characterized in that a part of said cooking pot forms a direct heat-transferring portion on which the heat-accumulating material is not disposed.

9. A thermally insulated cooking vessel according to Claim 7, characterized in that the heat-accumulating material which is provided to said cooking pot consists of a single type of heat-accumulating material.

10. A thermally insulated cooking vessel according to Claim 7, characterized in that the heat-accumulating material which is provided to said cooking pot consists of a composite heat-accumulating material in which plural types of heat-accumulating materials are combined together.

11. A thermally insulated cooking vessel according to Claim 10, characterized in that said composite heat-accumulating material comprises a latent-heat-accumulating material and a sensible-heat-accumulating material.

12. A thermally insulated cooking vessel according to Claim 7, characterized in that a heat-shielding plate which is attachable and detachable is attached to said cooking pot so as to be approximately parallel to the side portion of said cooking pot during heating.

13. A thermally insulated cooking vessel according to Claim 12, characterized in that said heat-shielding plate comprises a body portion, which has a cylindrical form having a diameter larger than that of the cooking pot, and a rim portion in which the upper end of said body portion extends inward along the diameter so as to be joined with the outer surface of the upper end portion of the cooking pot; and in that said body portion is provided with an air introduction opening at a lower end, and said rim portion is provided with a vent.
